# EUROPÄISCHE PATENTANMELDUNG

(11) **EP 4 741 137 A1**
(43) Veröffentlichungstag der Anmeldung: **13.05.2026**
(21) Anmeldenummer: 25212264.3
(22) Anmeldetag: 30.10.2025
(51) Int. Cl.: B29C 49/06, B29C 49/78, B29C 49/42, B29C 49/00, B29C 49/64, B29C 49/36, G01N 21/90

(54) **VORRICHTUNG UND VERFAHREN ZUM HERSTELLEN VON KUNSTSTOFFBEHÄLTNISSEN MIT ZUORDNUNG VON HERSTELLUNGSKAVITÄTEN**

(30) Priorität: 08.11.2024 DE 102024132670
(71) Anmelder: Krones AG, 93073 Neutraubling (DE)
(72) Erfinder: Geltinger, Florian, 93073 Neutraubling (DE)
(74) Vertreter: Hannke Bittner & Partner mbB Regensburg

(57) **Zusammenfassung**

Vorrichtung (1) zum Herstellen von Kunststoffbehältnissen mit einer Herstellungseinrichtung (2) zum Herstellen von Kunststoffvorformlingen (10), wobei diese Herstellungseinrichtung (2) eine Vielzahl von Herstellungskavitäten (22) aufweist, und mit einer Umformungseinrichtung (6), welche dazu geeignet und bestimmt ist, die von der Herstellungseinrichtung (2) hergestellten Kunststoffvorformlinge (10) zu Kunststoffbehältnissen (20) umzuformen, mit einer Transporteinrichtung (8), welche die von der Herstellungseinrichtung (2) hergestellten Kunststoffvorformlinge (10) zu der Umformungseinrichtung (6) entlang eines vorgegebenen Transportpfads transportiert und mit einer Erwärmungseinrichtung (4), welche die von der Herstellungseinrichtung (2) hergestellten Kunststoffvorformlinge (10) erwärmt, dadurch gekennzeichnet, dass die Vorrichtung (1) wenigstens eine erste Inspektionseinrichtung (11-19) aufweist, welche dazu geeignet und bestimmt ist, wenigstens eine physikalische Eigenschaft eines von der Herstellungseinrichtung (2) hergestellten Kunststoffvorformlings (10) zu erfassen und die Vorrichtung (1) weiterhin eine erste Zuordnungseinrichtung (32) aufweist, welche dazu geeignet und bestimmt ist einem inspizierten Kunststoffvorformling (10) diejenige Herstellungskavität (22), welche diesen Kunststoffvorformling (10) hergestellt hat, zuzuordnen.

## Beschreibung

Die vorliegende Erfindung bezieht sich auf eine Vorrichtung und ein Verfahren zum Herstellen von Kunststoffbehältnissen. Aus dem Stand der Technik sind derartige Vorrichtungen und Verfahren seit langem bekannt. Dabei ist es beispielsweise bekannt, dass sogenannte Kunststoffvorformlinge erwärmt werden und in diesem erwärmten Zustand zu Kunststoffflaschen umgeformt und insbesondere (streck)geblasen werden.

Auch sind aus dem Stand der Technik Vorrichtungen und Verfahren zum Herstellen derartiger Kunststoffvorformlinge bekannt, insbesondere in Form sogenannter Spritzgießmaschinen.

In jüngerer Zeit ist man auch bestrebt, derartige Maschinen zu Gesamtanlagen zu kombinieren. Dabei werden zunächst Kunststoffvorformlinge hergestellt, beispielsweise mittels einer Spritzgießmaschine und diese werden anschließend zu Behältnissen und insbesondere Kunststoffflaschen umgeformt.

Bei derartigen Vorrichtungen ist es auch bekannt, dass bestimmte Eigenschaften der Kunststoffvorformlinge inspiziert werden. Mittels dieser im Rahmen der Inspektion ermittelten Daten ist es möglich, beispielsweise die nachgeordnete Umformungsmaschine, wie insbesondere eine Blasmaschine zu steuern und/oder zu regeln.

So ist beispielsweise eine Onlineinspektion nach einer Spritzgussmaschine oder in einer Blasmaschine bekannt. Derartige Vorgehensweisen sind jedoch aufwendig und es können auch keine Lücken geschlossen werden.

Aus der EP 1 674 234 B1 sind eine Methode und eine Vorrichtung zur Handhabung von ausgeworfenen Spritzgussteilen bekannt. Dabei wird bestimmt, aus welchem Gießformhohlraum eine untersuchte Komponente ausgeworfen worden ist.

Die EP 0 793 569 B1 beschreibt eine Flaschenkontrolle auf dem Transportweg wo die Flasche geformt wird.

Aus der WO 2018/036857 A1 ist ein optisches Inspektionssystem für Preformlinge bekannt. Dabei wird vorgeschlagen, dass sich die Preformlinge in einer gegenüber einem Spritzgussvorgang unveränderten relativen Lage befinden.

Die DE 10 2016 118 670 A1 beschreibt ein Verfahren und eine Vorrichtung zur Prüfung von Preforms. Dabei werden Wärmebilder von Preforms mittels einer Wärmebildkamera während einer Übergabe der Preforms aufgenommen.

Aus der DE 10 2009 011 269 B3 sind ein Verfahren und eine Vorrichtung zur Aussonderung von Rückstellmustern bekannt. Dabei soll diese Aussonderung entfernt von einer Herstellungsmaschine erfolgen.

Die WO 2018/051227 A1 beschreibt eine Inspektionsvorrichtung für Kunststoffvorformlinge. Die DE 600 28 756 T2 beschreibt eine Methode und eine Vorrichtung zur Handhabung von ausgeworfenen Spritzgussteilen. Dabei werden auszuwerfende Komponenten in einer ausgewählten Ordnung gehalten.

Die DE 10 2018 102 299 A1 beschreibt ein Verfahren und eine Anordnung zur Steuerung mindestens eines Prozessparameters einer Spritzgießmaschine. Dabei werden Bilddaten jedes zu einem Prüfsystem geförderten Spritzgussteils aufgenommen.

Der vorliegenden Erfindung liegt daher die Aufgabe zugrunde, eine derartige Gesamtsteuerung derartiger Maschinen zu verbessern. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Herstellen von Kunststoffbehältnissen und insbesondere Kunststoffflaschen weist eine Herstellungseinrichtung zum Herstellen von Kunststoffvorformlingen auf, wobei diese Herstellungseinrichtung eine Vielzahl von Herstellungskavitäten aufweist, welche jeweils zum Formen einzelner Kunststoffvorformlinge geeignet und bestimmt sind.

Weiterhin weist die Vorrichtung eine Umformungseinrichtung auf, welche dazu geeignet und bestimmt ist, die von der Herstellungseinrichtung hergestellten Kunststoffvorformlinge zu Kunststoffbehältnissen umzuformen, wobei diese Umformungseinrichtung eine Vielzahl von Umformungsstationen aufweist, welche jeweils dazu geeignet und bestimmt sind, Kunststoffvorformlinge zu den Kunststoffbehältnissen umzuformen.

Weiterhin weist die Vorrichtung eine Transporteinrichtung auf, welche die von der Herstellungseinrichtung hergestellten Kunststoffvorformlinge zu der Umformungseinrichtung entlang eines vorgegebenen Transportfahrt transportiert.

Bevorzugt weist diese Transporteinrichtung mehrere Transporteinheiten und insbesondere sich aneinander anschließende Transporteinheiten auf. Bevorzugt ist die Transporteinrichtung dazu geeignet und bestimmt, die Kunststoffvorformlinge derart zu transportieren, dass sich eine Reihenfolge der transportierten Kunststoffvorformlinge nicht ändert.

Weiterhin ist bevorzugt eine Erwärmungseinrichtung vorgesehen, welche die von der Herstellungseinrichtung hergestellten Kunststoffvorformlinge erwärmt, wobei diese Erwärmungseinrichtung bevorzugt zwischen der Herstellungseinrichtung und der Umformungseinrichtung angeordnet ist. Die Anmelderin behält sich vor Schutz zu beanspruchen für eine Vorrichtung, welche keine derartige Erwärmungseinrichtung aufweist.

Erfindungsgemäß weist die Vorrichtung wenigstens eine erste Inspektionseinrichtung auf, welche dazu geeignet und bestimmt ist, wenigstens eine physikalische Eigenschaft eines von der Herstellungseinrichtung hergestellten Kunststoffvorformlings zu erfassen und wenigstens einen ersten Wert auszugeben, der für diese physikalische Eigenschaft charakteristisch ist.

Daneben weist die Vorrichtung wenigstens eine erste Zuordnungseinrichtung auf, welche dazu geeignet und bestimmt ist, einem inspizierten Kunststoffvorformling diejenige Herstellungskavität, welche diesen Kunststoffvorformling hergestellt hat, zuzuordnen. Bevorzugt ist diese Zuordnungseinrichtung dazu geeignet und bestimmt, diese Zuordnung auf Basis einer Markierung an dem Kunststoffvorformling durchzuführen.

Bevorzugt ist diese Zuordnungseinrichtung dazu geeignet und bestimmt, mehreren inspizierten Kunststoffvorformlingen und bevorzugt allen inspizierten Kunststoffvorformlingen jeweils diejenige Herstellungskavität zuzuordnen, welche die jeweils inspizierten Kunststoffvorformlinge hergestellt hat.

Bevorzugt ist die Inspektionseinrichtung zur Inline - Inspektion geeignet und bestimmt. Besonders bevorzugt ist die Inspektionseinrichtung dazu geeignet und bestimmt alle hergestellten Kunststoffvorformlinge zu inspizieren.

Vorteilhaft ist jede Herstellungskavität dazu geeignet und bestimmt, die von ihr hergestellten Kunststoffvorformlinge mit einer für diese Herstellungskavität eindeutigen Markierung zu versehen. So kann beispielsweise diese Markierung in der Art eines Stempelelements auf die einzelnen Kunststoffvorformen aufgebracht werden. Besonders bevorzugt handelt es sich hierbei um eine Markierung, welche von der Identifikationseinrichtung ausgelesen werden kann und insbesondere um eine optisch wahrnehmbare Markierung.

Bei einer weiteren vorteilhaften Ausführungsformen ist die Umformungseinrichtung eine Blaformmaschine und insbesondere eine Streckblasmaschine. Bevorzugt weist die Blasformmaschine einen bewegbaren und insbesondere drehbaren Träger auf, an dem die Umformungsstationen angeordnet sind.

Besonders bevorzugt handelt es sich bei diesem drehbaren Träger um ein sogenanntes Blasrad. Bevorzugt weist jede Umformungsstation eine Reckstange auf, welche in die Kunststoffvorformlinge einführbar ist, um diese in ihrer Längsrichtung zu dehnen. Weiterhin weist bevorzugt jede Umformungsstation eine Beaufschlagungseinrichtung und insbesondere eine Blasdüse auf, welche bevorzugt in einer Längsrichtung der Kunststoffvorformlinge bewegbar und auf die Kunststoffvorformlinge zustellbar ist, um diese mit einem fließfähigen Medium und insbesondere mit einem gasförmigen Medium und insbesondere mit Blasluft zu beaufschlagen.

Bei einer weiteren vorteilhaften Ausführungsformen ist die Herstellungseinrichtung eine Spritzgießmaschine.

Bei einer weiteren bevorzugten Ausführungsform handelt es sich bei der Erwärmungseinrichtung um einen Infrarotofen. Es wäre jedoch auch die Verwendung eines Mikrowellenofens denkbar. Besonders bevorzugt weist diese Erwärmungseinrichtung eine Transporteinrichtung auf, welche dazu geeignet und bestimmt ist, die Kunststoffvorformlinge insbesondere vereinzelt und in einer Reihe zu transportieren.

Besonders bevorzugt weist die Erwärmungseinrichtung eine Dreheinrichtung auf, welche die Kunststoffvorformlinge, insbesondere während deren Erwärmung bezüglich ihrer Längsachse dreht. Auf diese Weise kann eine gleichförmige Erwärmung der Kunststoffvorformlinge erreicht werden.

Besonders bevorzugt weist die Erwärmungseinrichtung eine Vielzahl von stationären Heizelementen auf, welche entlang des Transportpfads der Kunststoffvorformlinge angeordnet sind und an welchen bevorzugt die Kunststoffvorformlinge während ihrer Erwärmung vorbeitransportiert werden.

Bei einer weiteren vorteilhaften Ausführungsform weist die Vorrichtung eine Kühleinrichtung auf, welche dazu geeignet und bestimmt ist, die hergestellten Kunststoffvorformlinge zu kühlen und besonders bevorzugt wenigstens abschnittsweise zu kühlen.

Bei einer weiteren vorteilhaften Ausführungsform weist die Vorrichtung eine Sortiereinrichtung auf, welche dazu geeignet und bestimmt ist, die Kunststoffvorformlinge hinsichtlich ihrer Ausrichtung zu sortieren. Bevorzugt handelt es sich hierbei um eine Sortiereinrichtung, welche zwei zueinander beabstandete und parallele Rollen aufweist, zwischen denen die Kunststoffvorformlinge transportierbar sind.

Bei einer weiteren vorteilhaften Ausführungsform weist die Vorrichtung eine Abstandserzeugungseinrichtung auf, welche Abstände und insbesondere gleiche Abstände zwischen transportierten Kunststoffvorformlingen erzeugt. Bei dieser Abstandserzeugungseinrichtung kann es sich beispielsweise um den sogenannten Eintaktstern handeln, der die genannten Abstände zwischen den transportierten Kunststoffvorformlingen erzeugt.

Bei einer bevorzugten Ausführungsform weist die Herstellungseinrichtung eine Steuerungseinrichtung und insbesondere eine Regelungseinrichtung auf, welche dazu geeignet und bestimmt ist, die Herstellungseinrichtung unter Berücksichtigung des ersten Werts zu steuern und insbesondere zu regeln.

Dabei ist es möglich, dass global Parameter gesteuert oder geregelt werden, welche für die Herstellung aller Kunststoffvorformlinge charakteristisch sind, es wäre jedoch auch eine Steuerung und/oder Regelung von bestimmten Kavitäten der Herstellungseinrichtung möglich.

So könnten beispielsweise individuell Temperaturen, ein Einspritzdruck, eine Schmelztemperatur, eine Einspritzgeschwindigkeit, der Nachdruck und die Haltezeit und/oder die Kühlzeit einzelner Kavitäten gesteuert werden.

Bei einer bevorzugten Ausführungsform ist die Herstellung der Kunststoffvorformlinge in den einzelnen Herstellungskavitäten individuell steuerbar.

Bei einer weiteren bevorzugten Ausführungsform ist wenigstens ein für die Herstellung der Kunststoffvorformlinge in den Herstellungskavitäten charakteristischer Parameter für jede Herstellungskavität individuell steuerbar. Bevorzugt sind wenigstens zwei derartige Parameter und bevorzugt wenigstens drei derartige Parameter individuell für jede Herstellungskavität steuerbar.

Bereits im bisherigen Stand der Technik ist es bekannt, dass in der Blasmaschine und/oder in der Erwärmungseinrichtung eine Vielzahl von für die Kunststoffvorformlinge relevante Merkmale inspiziert werden. Im Rahmen der Erfindung wird also vorgeschlagen, durch eine zusätzliche Erkennung der einzelnen Kunststoffvorformlinge, d. h. eine Kunststoffvorformling - Qualitäten - Erkennung, insbesondere in der Erwärmungseinrichtung, diese Merkmale der jeweiligen Herstellungskavität im Spritzgießwerkzeug zuzuordnen.

Bevorzugt kann über eine Closed - loop Regelung auf Basis der Herstellungsqualität und der Merkmalsstatistik der Prozess an der Spritzgießmaschine gesteuert und insbesondere geregelt werden.

Besonders bevorzugt erfolgt diese Regelung global und/oder individuell und bevorzugt sowohl global als auch individuell für die jeweilige Herstellungskavität. So können wie gesagt Parameter für alle Herstellungskavitäten geändert werden, es wäre doch auch möglich, Parameter für einzelne Herstellungskavitäten zu ändern oder anzupassen.

Bei einer weiteren bevorzugten Ausführungsform werden die unten genau erläuterten Merkmale kavitätsbezogen ausgewertet. So können auch Statistiken über die einzelnen kavitätsbezogenen Werte ausgegeben werden. Besonders bevorzugt kann dies am HMI (human machine interface) der Herstellungseinrichtung bzw. Spritzgießmaschine erfolgen. Daneben wäre es auch möglich, eine Visualisierung der Werte vorzunehmen, insbesondere auch in der Nähe der Herstellungseinrichtung bzw. Spritzgießmaschine.

Bei einer weiteren vorteilhaften Ausführungsform ist eine kunststoffvorformlingsweise Inspektion der Kunststoffvorformlinge vorgesehen, insbesondere eine Inlineinspektion. So ist es beispielsweise möglich, dass die oben genannte Inspektion mit einer derartigen Inline - Inspektion der Kunststoffvorformlinge, beispielsweise am Auslauf der Herstellungseinrichtung kombiniert wird. Auf diese Weise können beispielsweise über eine Inspektion des Schüttguts (d.h. der Kunststoffvorformlinge) auf einem Transportband oder in einer Übergabe von einem Transportband auf das nächste Transportband weitere Merkmale inspiziert werden und bei der oben genannten Regelung und Auswertung eingebunden werden.

Bei einer weiteren bevorzugten Ausführungsform ist die erste Inspektionseinrichtung in einem Bereich der Erwärmungseinrichtung angeordnet. Unter einem Bereich der Erwärmungseinrichtung werden insbesondere die Bereiche von einer Zuführeinrichtung, welche die Kunststoffvorformlinge der eigentlichen Erwärmungseinrichtung zuführt, bis hin zu einem Ende einer Erwärmungsstrecke verstanden.

So kann beispielsweise diese erste Inspektionseinrichtung im Bereich eines Zuführsterns und insbesondere Eintaktsterns vorgesehen sein, der die Kunststoffvorformlinge vereinzelt und so in diesem vereinzelten Zustand der Transporteinrichtung der Erwärmungseinrichtung zuführt.

Daneben wäre es auch möglich, die erste Inspektionseinrichtung in einem Bereich anzuordnen, in dem die Kunststoffvorformlinge erwärmt werden, beispielsweise entlang eines geradlinigen Transportpfads der Kunststoffvorformlinge.

Bevorzugt weist die Erwärmungseinrichtung eine umlaufende Transporteinrichtung auf. Insbesondere handelt es sich hierbei um eine umlaufende Transportkette oder ein umlaufendes Transportband, an der eine Vielzahl von Halteeinrichtungen zum Halten der Kunststoffvorformlinge angeordnet ist.

Besonders bevorzugt weist die Erwärmungseinrichtung einen ersten Erwärmungsabschnitt auf, in dem die Kunststoffvorformlinge erwärmt werden, sowie einen zweiten Erwärmungsabschnitt, in dem die Kunststoffvorformlinge ebenfalls erwärmt werden. Besonders bevorzugt ist zwischen dem ersten Erwärmungsabschnitt und dem zweiten Erwärmungsabschnitt ein Übergangsabschnitt vorgesehen, in welchem die Kunststoffvorformlinge nicht erwärmt werden

Bevorzugt werden die Kunststoffvorformlinge entlang wenigstens eines und bevorzugt wenigstens beider Erwärmungsabschnitte geradlinig transportiert. Besonders bevorzugt weist die Transporteinrichtung einen Umlenkbereich auf, in dem eine Bewegungsrichtung der Kunststoffvorformlinge umgekehrt wird. So kann die Transporteinrichtung beispielsweise zwei Transporträder aufweisen, welche zum Umlenken des Transportmittels wie einer Kette dienen.

Besonders bevorzugt ist die erste Inspektionseinrichtung oder wenigstens eine Inspektionseinrichtung in einem Bereich einer derartigen Umlenkung angeordnet. Dies bringt den Vorteil mit sich, dass in diesen Bereichen die Kunststoffvorformlinge einen größeren Abstand zueinander aufweisen als in den geradlinigen Transportabschnitten. Daneben bringt dies auch den Vorteil mit sich, dass die Kunststoffvorformlinge in diesen Bereichen üblicherweise nicht oder in einer zum Zweck der Inspektion definiert um ihre eigene Achse gedreht werden, während sie andererseits in den Bereichen der Erwärmung auch um ihre eigene Achse gedreht werden.

Im Bereich der Heizstrecken (d.h. insbesondere vor und nach der Umlenkung) werden die Kunststoffvorformlinge bevorzugt aktiv rotiert. Die Rotation ist aber an den Heizprozess angepasst und kann sehr langsam (lange Wegstrecke für eine Umdrehung) oder sehr schnell erfolgen.

In der Umlenkung werden bevorzugt die Kunststoffvorformlinge aktiv um ihre eigene Achse gedreht. Die Drehung erfolgt bevorzugt unabhängig vom Heizprozess und ist bevorzugt reproduzierbar auf die Inspektion abgestimmt, damit die Kameras eine annähernde 360° Abwicklung aufnehmen können.

Besonders bevorzugt handelt es sich bei der Inspektionseinrichtung um eine optische Inspektionseinrichtung, welche dazu geeignet und bestimmt ist, ein ortsaufgelöstes Bild der Kunststoffvorformlinge und insbesondere der von der Transporteinrichtung transportierten Kunststoffvorformlinge aufzunehmen. Bevorzugt ist diese Inspektionseinrichtung dazu geeignet und bestimmt, wenigstens ein ortsaufgelöstes Bild der transportierten Kunststoffvorformlinge während deren Bewegung aufzunehmen.

Besonders bevorzugt ist die erste Inspektionseinrichtung an einer vorgegebenen Position entlang des Transportpfads der Kunststoffvorformlinge angeordnet. Vorteilhaft ist diese Position aus einer Gruppe von Positionen ausgewählt, welche eine Zuführeinrichtung (bzw. den Bereich einer Zuführeinrichtung) enthält, welche die Kunststoffvorformlinge der Erwärmungseinrichtung zuführt, einen Umlenkabschnitt der Transporteinrichtung, in welchem eine Transportrichtung der Kunststoffvorformlinge umgekehrt wird und eine Zuführeinrichtung, welche die Kunststoffvorformlinge der Umformungseinrichtung zuführt.

Es kann jedoch auch eine Inspektionseinrichtung im Bereich der Transporteinrichtung vorgesehen sein, welche die Kunststoffvorformlinge der Erwärmungseinrichtung zuführt.

Diese Positionen sind, wie erwähnt, besonders geeignet, da in diesen Bereichen die Kunststoffvorformlinge zueinander einen definierten und insbesondere gleichen Abstand haben sodass insbesondere einzelne Kunststoffvorformlinge identifizierbar sind. Auf diese Weise ist es auch möglich, den Inspektionsergebnissen bestimmter Kunststoffvorformlinge jeweils diejenige Herstellungskavität zuzuordnen, welche diesen Kunststoffvorformling hergestellt hat.

Bei einer weiteren vorteilhaften Ausführungsform weist die Vorrichtung eine weitere Inspektionseinrichtung zum Inspizieren der Kunststoffvorformlinge auf, wobei bevorzugt diese weiteren Inspektionseinrichtung an einem Auslauf der Herstellungseinrichtung angeordnet ist. So ist es möglich, die Herstellung der Kunststoffvorformlinge insbesondere direkt am Auslauf der Herstellungseinrichtung und insbesondere einer Spritzgießmaschine zu überprüfen.

Bevorzugt sind auch bei dieser weiteren Inspektionseinrichtung diejenigen Herstellungskavitäten zuordenbar, welche die entsprechenden inspizierten Kunststoffvorformlinge hergestellt haben. Dabei ist es möglich, dass diese weitere Inspektionseinrichtung ein ortsaufgelöstes Bild sämtlicher hergestellten Kunststoffvorformlinge bzw. derjenigen Kunststoffvorformlinge, die in einem gleichen Spritzgießvorgang hergestellt wurden, zu überprüfen.

Bevorzugt gibt die Herstellungseinrichtung die Kunststoffvorformlinge jeweils chargenweise aus. Dies bedeutet, dass bevorzugt sämtliche Herstellungskavitäten laufend Kunststoffvorformlinge produzieren und diese jeweils im Rahmen einer einheitlichen Charge ausgegeben werden.

Bei einer weiteren vorteilhaften Ausführungsform weist die Vorrichtung eine zweite Inspektionseinrichtung auf, welche dazu geeignet und bestimmt ist, wenigstens eine zweite physikalische Eigenschaft eines von der Herstellungseinrichtung hergestellten Kunststoffvorformlinge zu erfassen und bevorzugt ein zweiten Wert auszugeben, der für diese physikalische Eigenschaft charakteristisch ist. Besonders bevorzugt sind die erste Inspektionseinrichtung und die zweite Inspektionseinrichtung an unterschiedlichen Positionen des Transportpfads der Kunststoffvorformlinge angeordnet.

Besonders bevorzugt weist die Vorrichtung wenigstens zwei Inspektionseinrichtungen auf, bevorzugt wenigstens drei Inspektionseinrichtungen und besonders bevorzugt wenigstens vier Inspektionseinrichtungen. Bevorzugt sind wenigstens zwei dieser Inspektionseinrichtungen und bevorzugt wenigstens drei dieser Inspektionseinrichtungen an unterschiedlichen Positionen entlang des Transportpfads der Kunststoffvorformlinge angeordnet.

Bevorzugt werden die Kunststoffvorformlinge an mehreren Inspektionseinrichtungen vorbeitransportiert oder sind an diesen vorbei transportierbar. Dabei können bevorzugt für einen bestimmten Kunststoffvorformling und bevorzugt für mehrere Kunststoffvorformling und besonders bevorzugt für alle Kunststoffvorformlinge mit mehreren Sensoreinrichtungen Inspektionen durchgeführt werden und die entsprechenden gemessenen Werte einander zugeordnet werden. Dies bedeutet, dass für jeden Kunststoffvorformling mehrere Parameter aufgenommen werden. Diese können bevorzugt auch einander zugeordnet werden.

Weiterhin kann dann für jeden Kunststoffvorformling die Herstellungskavität bestimmt werden, welche diesen Kunststoffvorformling hergestellt hat.

Bevorzugt kann damit für jeden Kunststoffvorformling ein Wertetupel mehrerer für diesen Kunststoffvorformling bestimmter Werte ermittelt werden und dieses kann weiterhin der Herstellungskavität zugeordnet werden, welche diesen Kunststoffvorformling hergestellt hat. Weiterhin kann auch noch diejenige Umformungsstation bestimmt werden, welche diesen Kunststoffvorformling zu einem Kunststoffbehältnis umformen wird.

Bevorzugt weist die Vorrichtung wenigstens zwei Inspektionseinrichtungen auf und insbesondere wenigstens zwei Inspektionseinrichtungen, welche wenigstens zwei unterschiedliche Bereiche der Kunststoffvorformlinge inspizieren. So kann eine Inspektionseinrichtung dazu geeignet und bestimmt sein, einen Mündungsbereich der Kunststoffvorformlinge zu inspizieren und die andere Inspektionseinrichtung kann dazu geeignet und bestimmt sein, einen Grundkörper der Kunststoffvorformlinge oder einen unteren Kuppenbereich der Kunststoffvorformlinge zu inspizieren.

Besonders bevorzugt kann auch den jeweiligen zweiten Werten jeweils die Herstellungskavität, welche den entsprechenden Kunststoffvorformling hergestellt hat, zugeordnet werden. Dabei kann wie oben erwähnt diese Zuordnung beispielsweise über die Erfassung einer Markierung, beispielsweise einer Nummer erfolgen, welche für eine bestimmte Herstellungsqualität charakteristisch ist.

Dabei ist zur Erfassung dieser Nummer bevorzugt eine Bildaufnahmeeinrichtung mit wenigstens zwei Kameras vorgesehen und bevorzugt auch eine Beleuchtungseinrichtung, welche die Kunststoffvorformlinge zum Zweck ihrer Inspektion beleuchtet. Bevorzugt ist diese Bildaufnahmeeinrichtung in einer Umlenkung der Erwärmungseinrichtung angeordnet. Besonders bevorzugt ist diese Bildaufnahmeeinrichtung oberhalb einer Inspektionseinrichtung angeordnet, welche eine Umfangswand der Kunststoffvorformlinge inspiziert.

Besonders bevorzugt stellen die Herstellungskavitäten Kunststoffvorformlinge her, die sich in wenigstens einer Markierung unterscheiden. So kann jede Herstellungsqualität bevorzugt jedem von ihr hergestellten Kunststoffvorformlinge ein eindeutiges charakteristisches Merkmal zuordnen bzw. den Kunststoffvorformling entsprechend markieren. So könnte beispielsweise die Herstellungseinrichtung ein Array von Herstellungskavitäten aufweisen, denen jeweils bestimmte Nummern zugeordnet sind, welche auch in den herzustellenden Kunststoffvorformling eingeprägt werden. Anhand dieser Nummer oder allgemein dieser Markierung kann dann auch die Herstellungskavität (eindeutig) identifiziert werden.

Besonders bevorzugt können auch die ersten und zweiten Ergebnisse und/oder Messwerte, welche den gleichen Kunststoffvorformling betreffen einander zugeordnet werden.

Besonders bevorzugt ist die wenigstens eine erste physikalische Eigenschaft und/oder eine zweite physikalische Eigenschaft eines von der Herstellungseinrichtung hergestellten Kunststoffvorformlings aus einer Gruppe von Eigenschaften ausgewählt, welche eine Eigenschaft einer Seitenwand des Kunststoffvorformlings, wie insbesondere aber nicht ausschließlich eine Dicke oder Transparenz, eine Eigenschaft einer Mündung des Kunststoffvorformlings wie insbesondere eine Eigenschaft eines Gewindes des Kunststoffvorformlings oder eine Eigenschaft eines Tragrings des Kunststoffvorformlings, eine Farbe des Kunststoffvorformlings, einen Infrarot - Absorptionsgrad eines Kunststoffvorformlings, eine Temperatur des oder der Kunststoffvorformlings bzw. Kunststoffvorformlinge, eine Feuchte des Kunststoffes, eine Materialverspannung, eine Eigenschaft eines Preformgates des Kunststoffvorformlings und dergleichen enthält.

Bei dem Preformgate handelt es sich um eine Einrichtung der Bodeninspektion bzw. ein Gate insbesondere im Einlauf der Blasformmaschine. Hierbei erfolgt bevorzugt eine Inspektion des Bodens des Kunststoffvorformlings auf korrekte Position. So kann beispielsweise das Taumeln des Preformkörpers erkannt werden.

Bevorzugt können mehrere dieser Eigenschaften mit einer oder auch mehreren Erfassungseinrichtungen oder Inspektionseinrichtungen gemessen werden. Insbesondere können mehrere Eigenschaften teilweise oder auch vollständig an unterschiedlichen Positionen des Transportpfads gemessen werden. Besonders bevorzugt werden diese besagten Eigenschaften an unterschiedlichen Positionen (des Transportpfads der Kunststoffvorformlinge) gemessen.

So kann beispielsweise eine Eigenschaft eines Kunststoffvorformlings an einem Preform - Gate, d. h. einer Einlaufsperre ermittelt werden. Daneben können Eigenschaften auch an einem Ofeneinlauf gemessen werden.

Bei einer weiteren bevorzugten Ausführungsform kann die Vorrichtung eine Feuchtigkeitsmesseinrichtung aufweisen, welche dazu geeignet und bestimmt ist, eine Feuchtigkeit der Kunststoffvorformlinge und/oder des Material der Kunststoffvorformlinge zu messen. Bei einer besonders bevorzugten Ausführungsform ist diese Feuchtigkeitsmesseinrichtung in einem Einlauf der Erwärmungseinrichtung angeordnet und/oder in einem Bereich, der vor der ersten Heizstrecke liegt, welche zur Erwärmung der Kunststoffvorformlinge dient. Auch die von dieser Feuchtigkeitsmesseinrichtung ermittelten Messwerte können zum Steuern der Erwärmungseinrichtung, der Umformungseinrichtung und/oder der Herstellungseinrichtung (und/oder der einzelnen Herstellungskavitäten) verwendet werden.

Bei einer weiteren bevorzugten Ausführungsform ist eine Sensoreinrichtung vorgesehen, welche wenigstens einen Messwert erfasst, der für die hergestellten Behältnisse charakteristisch ist. So kann beispielsweise eine Wandungsstärke oder eine Lichttransmission erfasst werden. Auch die von dieser Sensoreinrichtung ermittelten Werte können zur Steuerung und insbesondere Regelung der einzelnen Umformungsstationen und insbesondere derjenigen Umformungsstation, welche das betreffende Kunststoffbehältnis hergestellt hat, verwendet werden.

Bevorzugt befindet sich diese Sensoreinrichtung im Bereich eines Auslaufsterns, welcher die umgeformten Behältnisse von der Umformungseinrichtung abführt.

Daneben weist die Vorrichtung bevorzugt einer weitere Inspektionseinrichtung auf, welche dazu geeignet und bestimmt ist, Fehler der Kunststoffvorformlinge zu erfassen wie beispielsweise Bruchstellen, insbesondere in einem Bodenbereich der Kunststoffvorformlinge. Bevorzugt ist diese weitere Inspektionseinrichtung im Bereich einer Zuführeinrichtung angeordnet, welche die Kunststoffvorformlinge der Umformungseinrichtung zuführt.

Bevorzugt können auch Messwerte dieser weiteren Inspektionseinrichtung zur Steuerung und insbesondere Regelung derjenigen Herstellungskavität, welche den betreffenden Kunststoffvorformling hergestellt hat und/oder zur Steuerung und/oder Regelung der Herstellungseinrichtung insgesamt verwendet werden.

Weitere Eigenschaften, wie insbesondere der Umfangswandungen können beispielsweise in der Umlenkung der Erwärmungseinrichtung wie oben erwähnt gemessen werden. Auch kann die Kavität des Kunststoffvorformlings bzw. dessen Innenraum in einem Ofen und insbesondere der Ofenumlenkung gemessen werden.

Eine weitere Eigenschaft und insbesondere Eigenschaften der Mündungen der Kunststoffvorformlinge werden bevorzugt in einer Zuführeinrichtung beispielsweise einem Einlaufstern zu einer Blasmaschine gemessen.

Eine weitere der Eigenschaften die für die Kunststoffvorformlinge charakteristisch ist, können beispielsweise Eigenschaften der Bodenkuppe der Kunststoffvorformlinge sein. Diese Merkmale können beispielsweise ebenfalls in einer Zuführeinrichtung wie einem Einlaufstern der Umformungseinrichtung gemessen werden. Eigenschaften wie die Infrarotabsorption, die Farbe und/oder die Temperatur können ebenfalls an unterschiedlichen Positionen gemessen werden, beispielsweise an den Umlenkbereichen der Erwärmungseinrichtung oder auch dem Einlaufstern.

Insgesamt ist es auf diese Weise möglich, die bereits bestehende Infrastruktur in einer Blas- und/oder Spritzgießmaschine zu nutzen, um wesentliche Merkmale zu inspizieren und um Synergie-Effekte durch den Zusammenbau bzw. die Verlockung der beiden Maschinen zu erreichen.

Bei einer weiteren vorteilhaften Ausführungsform weist die Vorrichtung eine zweite Zuordnungseinrichtung auf, welche einem inspizierten Kunststoffvorformling diejenige Umformungsstation zuordnet (bzw. zuordenbar macht), welchen diesen Kunststoffvorformlinge zu einem Kunststoffbehältnissen umformt bzw. umformen wird. Auf diese Weise ist auch eine individuelle Steuerung der einzelnen Umformungsstationen möglich. So kann beispielsweise der Umformungsvorgang und insbesondere der Streckblasvorgang für jeden Kunststoffvorformlinge und insbesondere für jede Umformungsstationen individuell auf Basis der gemessenen Werte gesteuert werden.

Bei einer weiteren bevorzugten Ausführungsform können bestimmte Messwerte des Kunststoffvorformlings, etwa Messwerte, welche für eine Wanddicke des Kunststoffvorformlings charakteristisch sind auch an die Herstellungseinrichtung und/oder die einzelnen Herstellungskavitäten übermittelt werden, um so eine Regelung der Herstellungseinrichtung oder der einzelnen Herstellungskavitäten auf Basis dieses Wertes also etwa der Wanddicke zu ermöglichen.

So können beispielsweise Charakteristika des Umformungsvorgangs gesteuert werden, welche aus einer Gruppe von Charakteristika oder Parametern ausgewählt sind, welche einen Blasdruck, eine Reckstangenbewegung, unterschiedliche Blasdruckniveaus, ein Umschalten zwischen Blasdruckniveaus, ein Zusammenwirken der Druckbeaufschlagung mit der Reckstangenbewegung und dergleichen enthält. Dies ist bevorzugt individuell für jeden einzelnen Kunststoffvorformling möglich. Bei der Inspektion wird also bevorzugt sowohl festgestellt, welche Herstellungskavität diesen Kunststoffvorformling hergestellt hat, als auch welche Umformungsstation diesen Kunststoffvorformling weiterverarbeiten wird.

Bei einer weiteren bevorzugten Ausführungsform weist die Vorrichtung wenigstens zwei unterschiedliche Inspektionseinrichtungen auf, welche dazu geeignet und bestimmt sind, wenigstens zwei insbesondere in der Längsrichtung der Kunststoffvorformlinge unterschiedliche Bereiche der Kunststoffvorformlinge zu inspizieren, wobei bevorzugt diese unterschiedlichen Bereiche aus einer Gruppe von Bereichen ausgewählt sind, welche einen Mündungsbereich der Kunststoffvorformlinge, einen Grundkörper der Kunststoffvorformlinge und einen Bodenbereich der Kunststoffvorformlinge enthält.

Bei einer weiteren bevorzugten Ausführungsform weist die Vorrichtung wenigstens eine Ausschleuseeinrichtung auf, welche dazu geeignet und bestimmt ist, von wenigstens einer Inspektionseinrichtung inspizierte Kunststoffvorformlinge aus einem Transportpfad und insbesondere einem Transportpfad zwischen der Herstellungseinrichtung und der Umformungseinrichtung auszuschleusen. Bevorzugt ist diese Ausschleuseeinrichtung in der Transportrichtung der Kunststoffvorformlinge nach sämtlichen Inspektionseinrichtungen angeordnet. Bevorzugt ist die Ausschleuseeinrichtung in der Transportrichtung der Kunststoffvorformlinge nach der Erwärmungseinrichtung angeordnet.

Die vorliegende Erfindung ist weiterhin auf ein Verfahren zum Herstellen von Kunststoffbehältnissen gerichtet, wobei eine Herstellungseinrichtung Kunststoffvorformlinge herstellt, und wobei diese Herstellungseinrichtung eine Vielzahl von Herstellungskavitäten aufweist, welche jeweils einzelne Kunststoffvorformlinge formen und wobei weiterhin eine Umformungseinrichtung die von der Herstellungseinrichtung hergestellten Kunststoffvorformlinge zu Kunststoffbehältnissen umformt, wobei diese Umformungseinrichtung eine Vielzahl von Umformungsstationen aufweist, welche jeweils die Kunststoffvorformlinge zu den Kunststoffbehältnissen umformen.

Weiterhin transportiert eine Transporteinrichtung die von der Herstellungseinrichtung hergestellten Kunststoffvorformlinge zu der Umformungseinrichtung entlang eines vorgegebenen Transportpfads und eine Erwärmungseinrichtung erwärmt die von der Herstellungseinrichtung hergestellten Kunststoffvorformlinge, wobei diese Erwärmungseinrichtung zwischen der Herstellungseinrichtung und der Umformungseinrichtung angeordnet ist.

Erfindungsgemäß weist die Vorrichtung wenigstens eine erste Inspektionseinrichtung auf, welche wenigstens eine physikalische Eigenschaft eines von der Herstellungseinrichtung hergestellten Kunststoffvorformlings erfasst und wenigstens einen ersten Wert ausgibt, der für diese physikalische Eigenschaft charakteristisch ist und weiterhin weist die Vorrichtung eine Zuordnungseinrichtung auf, welche einem inspizierten Kunststoffvorformling diejenige Herstellungskavität zuordnet, welche diesen Kunststoffvorformlinge hergestellt hat.

Es wird daher auch im Rahmen des erfindungsgemäßen Verfahrens vorgeschlagen, dass die bestimmte Eigenschaft eines Kunststoffvorformlings bzw. eines inspizierten Kunststoffvorformlings diejenige Herstellungskavität zugeordnet wird, welche diesen Kunststoffvorformling hergestellt hat. Auf diese Weise ist, wie oben erwähnt, eine Steuerung und/oder Regelung der Herstellungseinrichtung und insbesondere auch der einzelnen Herstellungskavitäten möglich.

Besonders bevorzugt wird die Herstellungseinrichtung wenigstens zeitweise unter Verwendung des ersten Werts gesteuert und insbesondere geregelt.

Bei einem weiteren bevorzugten Verfahren wird die Umformungseinrichtung wenigstens zeitweise unter Verwendung des ersten Wertes gesteuert. Besonders bevorzugt wird einem inspizierten Kunststoffvorformling diejenige Umformungsstation zugeordnet, welche diesen Kunststoffvorformling zu einem Kunststoffbehältnis umformen wird. Besonders bevorzugt findet auf diese Weise eine unabhängige Steuerung der einzelnen Umformungsstationen statt.

Bei einem besonders bevorzugten Verfahren weist die Vorrichtung wenigstens eine zweite Inspektionseinrichtung auf, welche wenigstens eine zweite physikalische Eigenschaft eines von der Herstellungseinrichtung hergestellten Kunststoffvorformlings erfasst und wenigstens einen zweiten Wert ausgibt, der für diese physikalische Eigenschaft charakteristisch ist.

Bevorzugt wird der erste Wert dem zweiten Wert zugeordnet. Besonders bevorzugt wird. auch diesem zweiten Wert eine Herstellungskavität zugeordnet, welche den entsprechenden Kunststoffvorformling hergestellt hat.

Weitere Vorteile und Ausführungsformen ergeben sich aus der beigefügten Zeichnung:
darin zeigt:

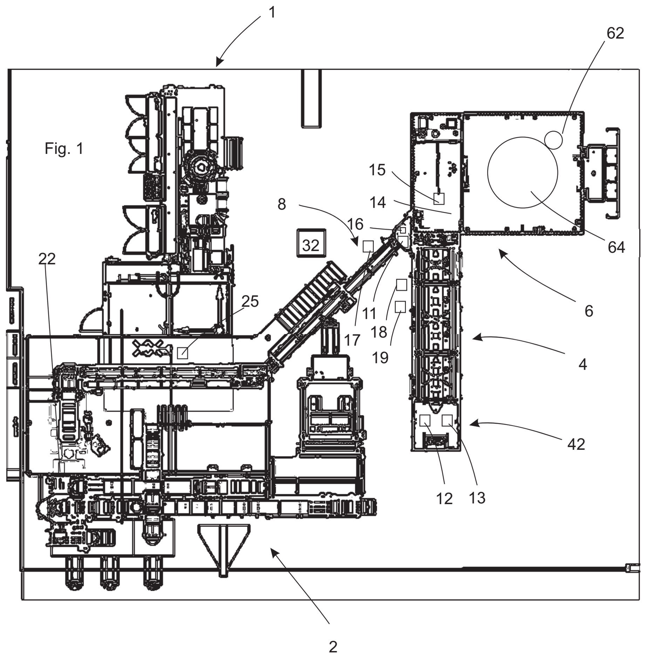

- Fig 1: eine schematische Darstellung einer erfindungsgemäßen Herstellungsvorrichtung zum Herstellen von Kunststoffbehältnissen.

Fig. 1 zeigt eine schematische Darstellung einer Vorrichtung zum Herstellen von Kunststoffbehältnissen und insbesondere von Kunststoffflaschen. Diese weist eine Herstellungseinrichtung 2 auf, welche Kunststoffvorformlinge herstellt. Insbesondere handelt es sich hierbei um eine Spritzgießmaschine. Das Bezugszeichen 22 skizziert schematisch und nicht positionsgerecht eine Herstellungskavität die zur Herstellung eines Kunststoffvorformlings dient.

Eine insgesamt mit 8 bezeichnete Transporteinrichtung transportiert die Kunststoffvorformlinge zu bzw. in Richtung einer Umformungsanordnung, welche eine Erwärmungseinrichtung 4 zum Erwärmen der Kunststoffvorformlinge aufweist, sowie eine dieser nachgeordnete Umformungseinrichtung 6, welche die Kunststoffvorformlinge zu Kunststoffbehältnissen und insbesondere Kunststoffflaschen umformt.

Die Erwärmungseinrichtung weist eine Transporteinrichtung, insbesondere in Form einer umlaufenden Transportkette auf, an der eine Vielzahl von Halteeinrichtungen angeordnet ist, welche jeweils dazu geeignet und bestimmt sind, einen einzelnen Kunststoffvorformling zu halten. Bevorzugt sind diese Halteeinrichtungen als Haltedorne ausgeführt, welche in die Mündungen der Kunststoffvorformlinge eingreifen.

Das Bezugszeichen 42 kennzeichnet eine Umlenkbereich der Transporteinrichtung, in dem die Transportrichtung der Kunststoffvorformlinge umgekehrt wird.

Das Bezugszeichen 64 kennzeichnet eine Transporteinrichtung, an der eine Vielzahl von Umformungsstationen 62 (nur eine gezeigt) angeordnet ist, welche jeweils die Kunststoffvorformlinge zu Kunststoffbehältnisse umformen.

Die Bezugszeichen 11 - 19 zeigen unterschiedliche Inspektionseinrichtungen, welche jeweils die Kunststoffvorformlinge auf unterschiedliche Eigenschaften hin inspizieren. Die Funktion der einzelnen Inspektionseinrichtungen 11 - 19 wird nachfolgend erläutert.

Das Bezugszeichen 11 kennzeichnet eine erste Inspektionseinrichtung, welche dazu geeignet und bestimmt ist, einen Grundkörper der Kunststoffvorformlinge (preform gatezu inspizieren. Dabei kann beispielsweise eine Exzentrität des Kunststoffvorformlings bezüglich dessen Drehachse inspiziert werden. Auch kann eine Krümmung (insbesondere Bananenform) des Grundkörpers des Kunststoffvorformlings wenigstens grob festgestellt werden.

Bevorzugt ist diese erste Inspektionseinrichtung 11 in einem Einlaufbereich der Erwärmungseinrichtung 4 angeordnet. Diese erste Inspektionseinrichtung bzw. die von dieser ersten Inspektionseinrichtung erfassten Werte können zur Steuerung und/oder Regelung der Herstellungseinrichtung verwendet werden.

Daneben können die von dieser Inspektionseinrichtung 11 gemessenen Werte auch verwendet werden, um fehlerhafte Kunststoffvorformlinge auszuwerfen, insbesondere bevor diese die Umformungseinrichtung erreichen.

Das Bezugszeichen 12 kennzeichnet eine zweite Inspektionseinrichtung. Diese ist bevorzugt in dem Umlenkbereich 42 der Erwärmungseinrichtung angeordnet. Bevorzugt dient diese zweite Inspektionseinrichtung 12 dazu, um den Grundkörper der Kunststoffvorformlinge zu inspizieren.

So können beispielsweise sog. Blackspots erfasst werden oder auch mit höherer Genauigkeit eine Krümmung (Bananenprofil) der Kunststoffvorformlinge. Daneben wäre es auch denkbar, Risse, Bruchstellen oder Blasen in dem Grundkörper zu erfassen. Daneben kann auch eine Länge und/oder eine Gestalt des Kunststoffvorformlings erfasst werden.

Bevorzugt werden auch diese Daten verwendet, um die Herstellungseinrichtung 2 und/oder die Umformungseinrichtung 6 zu steuern. Es ist dabei bevorzugt auch möglich, auf Basis dieser gemessenen Werte einzelne Herstellungskavitäten 22 der Herstellungseinrichtung 2 zu steuern und/oder zu regeln. Diese Werte dienen insbesondere auch dazu um die Gesamtanlage zu steuern und insbesondere zu regeln.

Eine dritte Inspektionseinrichtung 13 dient dazu, eine Markierung auf den einzelnen Kunststoffvorformlingen zu erfassen, welche für diejenige Herstellungskavität 22 charakteristisch ist, welche diesen Kunststoffvorformling hergestellt hat. So kann beispielsweise mittels der Inspektionseinrichtung 13 eine Nummer der Herstellungskavität erfasst werden.

Bevorzugt ist auch die dritte Inspektionseinrichtung 13 in dem Umlenkbereich der Erwärmungseinrichtung 4 angeordnet. Es wäre auch möglich, dass die Funktionen der zweiten Inspektionseinrichtung und der dritten Inspektionseinrichtung 13 in einer gemeinsamen Inspektionseinrichtung zusammengefasst sind.

Das Bezugszeichen 14 kennzeichnet eine vierte Inspektionseinrichtung, welche dazu geeignet und bestimmt ist, einen Mündungsbereich der Kunststoffvorformlinge zu inspizieren. Diese vierte Inspektionseinrichtung 14 kann beispielsweise eine Ovalität der Kunststoffvorformlinge erfassen oder auch Schäden an deren Mündung.

Daneben kann diese vierte Inspektionseinrichtung 14 auch einen Wert erfassen, der für eine Opazität der Kunststoffvorformlinge oder für Kontaminationen dieser Mündungsbereiche charakteristisch ist.

Bevorzugt ist diese vierte Inspektionseinrichtung 14 in dem Bereich einer Abführeinrichtung wie etwa eines Abführrades angeordnet, welches die erwärmten Kunststoffvorformlinge von der Erwärmungseinrichtung 4 abführt und diese zu der Umformungseinrichtung 6 transportiert. Die von dieser vierten Inspektionseinrichtung ermittelten Werte können verwendet werden, um die Herstellungseinrichtung 2 und/oder die Umformungseinrichtung 6 zu steuern.

Das Bezugszeichen 15 bezieht sich auf eine fünfte Inspektionseinrichtung, welche bevorzugt dazu dient, eine Bodenkuppe der Kunststoffvorformlinge zu inspizieren. Diese fünfte Inspektionseinrichtung 15 ist bevorzugt ebenfalls in dem Bereich einer Abführeinrichtung wie etwa eines Abführrades angeordnet, welches die erwärmten Kunststoffvorformlinge von der Erwärmungseinrichtung 4 abführt und diese zu der Umformungseinrichtung 6 transportiert.

Bevorzugt erfasst diese fünfte Inspektionseinrichtung Eigenschaften der Kunststoffvorformlinge, welche aus einer Gruppe von Eigenschaften ausgewählt ist oder sind, welche eine Exzentrizität der Kunststoffvorformlinge, ein Gate (bzw. eine Position und/oder Größe eines Anspritzpunkts, um auf diese Weise zu prüfen, ob sich der Anspritzpunkt um Zentrum befindet), eine Krümmung (insb. bananenartige Krümmung), eine Farbe und/oder eine Verschmutzung erfasst.

Auch diese Werte können dafür genutzt werden, die Herstellungseinrichtung 2 und/oder die einzelnen Herstellungskavitäten zu steuern.

Die hier genannten Inspektionseinrichtungen 11 - 15 dienen insbesondere zum Regeln der Herstellungseinrichtung 2 und/oder der einzelnen Herstellungskavitäten. Bevorzugt erfolgt mit diesen Inspektionseinrichtung eine Inspektion aller Kunststoffvorformlinge und insbesondere aller transportierten Kunststoffvorformlinge. Insbesondere kann dabei auch eine Regelung zur Behebung erfasster Defekte oder Fehler vorgenommen werden.

Daneben können mit den gemessenen Werten auch die einzelnen Umformungsstationen gesteuert werden.

Das Bezugszeichen 16 kennzeichnet eine sechste Inspektionseinrichtung. Diese ist bevorzugt dazu geeignet und bestimmt das Material der Kunststoffvorformlinge zu inspizieren. Dabei kann beispielsweise ein Wassergehalt oder auch eine Infrarot-Absorption bestimmt werden.

Bevorzugt ist diese sechste Inspektionseinrichtung in einem Einlauf der Erwärmungseinrichtung 4 angeordnet. Bevorzugt können von dieser sechsten Inspektionseinrichtung 16 gemessene Werte auch zur Steuerung und insbesondere Regelung der Herstellungseinrichtung oder auch der einzelnen Herstellungskavitäten 22 verwendet werden.

Das Bezugszeichen 17 kennzeichnet eine siebte Inspektionseinrichtung. Diese ist bevorzugt dazu geeignet und bestimmt das Material der Kunststoffvorformlinge zu inspizieren. So kann hier beispielsweise eine Farbe oder ein Farbeinschlag (sog. Yellowing) erfasst werden. Bevorzugt ist diese siebte Inspektionseinrichtung in einem Einlauf der Erwärmungseinrichtung 4 angeordnet.

Das Bezugszeichen 18 kennzeichnet eine achte Inspektionseinrichtung, hier in Form einer Temperaturmesseinrichtung. Diese bestimmt eine Temperatur der einzelnen Kunststoffvorformling. Bevorzugt ist auch diese achte Inspektionseinrichtung 18 an einem Einlauf der Erwärmungseinrichtung 4 angeordnet. Die von dieser achten Inspektionseinrichtung 18 gemessenen Werte und insbesondere Temperaturwerte können ebenfalls genutzt werden, um die Herstellungseinrichtung 2 und/oder die einzelnen Herstellungskavitäten zu steuern und insbesondere zu regeln.

Bevorzugt weist die Vorrichtung eine weitere Temperaturmesseinrichtung (nicht gezeigt) auf, welche dazu geeignet und bestimmt ist, die Temperatur der Kunststoffvorformling nach deren Erwärmung durch die Erwärmungseinrichtung 4 zu erfassen.

Bevorzugt dienen die Inspektionseinrichtungen 16 - 18 auch dazu, Tendenzen und Änderungen der gemessenen Werte zu erfassen. Auf diese Weise ist es möglich, die Herstellungseinrichtung 2 und/oder die einzelnen Herstellungskavitäten nachzuregeln.

Bevorzugt sind dabei die besagten Tendenzen und Änderungen für jede einzelne Herstellungskavität erfassbar und/oder zuordenbar.

Das Bezugszeichen 19 kennzeichnet eine neunte Inspektionseinrichtung, welche bevorzugt dazu geeignet und bestimmt ist, die Temperaturen der einzelnen Grundkörper oder Innenräume der einzelnen Kunststoffvorformlinge zu bestimmen. Bevorzugt ist auch diese neunte Inspektionseinrichtung in einem Bereich des Einlaufs der Erwärmungseinrichtung 2 angeordnet.

Bevorzugt können auch die Messwerte dieser neunten Inspektionseinrichtung verwendet werden, um die Herstellungseinrichtung und/oder die einzelnen Herstellungskavitäten zu steuern und insbesondere zu regeln.

Das Bezugszeichen 25 kennzeichnet eine weitere Inspektionseinrichtung, welche insbesondere dazu geeignet und bestimmt ist, die unmittelbar von der Herstellungseinrichtung und/oder den einzelnen Herstellungskavitäten hergestellten Kunststoffvorformlinge zu inspizieren. Auch diese weitere Inspektionseinrichtung ist dabei bevorzugt zur Inline - Überwachung geeignet und bestimmt.

Bevorzugt inspiziert diese weitere Inspektionseinrichtung nur einen bestimmten Anteil der hergestellten Kunststoffvorformlinge, wobei bevorzugt dieser Anteil zwischen 20% und 90%, bevorzugt zwischen 30% und 90%, bevorzugt zwischen 40% und 85%, bevorzugt zwischen 50% und 85%, bevorzugt zwischen 60% und 80% und besonders bevorzugt zwischen 70% und 80% liegt. Durch diese zusätzliche inline Überwachung wird ein noch schnelleres Feedback für den Herstellungsprozess (der Kunststoffvorformlinge) erreicht.

Das Bezugszeichen 32 kennzeichnet eine erste Zuordnungseinrichtung, welche dazu geeignet und bestimmt ist, den für bestimmte Kunststoffvorformlinge gemessenen Werte einer oder mehrerer Inspektionseinrichtungen diejenige Herstellungskavität zuzuordnen, welche den betreffenden Kunststoffvorformling hergestellt hat. Diese Zuordnung kann dabei beispielsweise mit Hilfe der von dritten Inspektionseinrichtung erfassten Markierung an den einzelnen Kunststoffvorformlingen erfolgen.

Bei einer weiteren vorteilhaften Ausführungsform kann, insbesondere im Bereich eines Auslaufs der Erwärmungseinrichtung und/oder nach der Heizstrecke eine Temperatur des Kunststoffvorformlings erfasst werden. Dabei ist bevorzugt eine Temperaturmesseinrichtung vorgesehen, welche die Temperatur der erwärmten Kunststoffvorformlinge ortsaufgelöst erfasst.

Bevorzugt kann dabei die Temperatur an wenigstens zwei in der Längsrichtung der Kunststoffvorformlinge unterschiedlichen Punkten erfasst werden, bevorzugt an wenigstens drei unterschiedlichen Punkten, bevorzugt an wenigstens vier unterschiedlichen Punkten, bevorzugt an wenigstens sechs unterschiedlichen Punkten, bevorzugt an wenigstens zehn unterschiedlichen Punkten und bevorzugt an wenigstens 16 unterschiedlichen Punkten. Auf diese Weise kann ein Temperaturprofil der einzelnen Kunststoffvorformlinge in deren Längsrichtung erstellt werden. Bevorzugt handelt es sich bei der Sensoreinrichtung, welche dieses Temperaturprofil erfasst, um eine IR - Kamera.

Es wird darauf hingewiesen, dass sämtliche Merkmale, welche unter Bezugnahme auf das Verfahren beschrieben wurden, in entsprechender Weise auch für die Vorrichtung offenbart sind, was insbesondere bedeutet, dass die entsprechende Vorrichtung Einrichtungen aufweist, welche zur Durchführung der jeweiligen Verfahren geeignet und bestimmt sind. Weiterhin sind auch Merkmale, welche unter Bezugnahme auf die Vorrichtung beschrieben wurden entsprechend für das oder die Verfahren anwendbar. Dies bedeutet, dass die Verfahren unter Verwendung der entsprechenden Vorrichtungsmerkmale ausgeführt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Herstellen von Kunststoffbehältnissen mit einer Herstellungseinrichtung (2) zum Herstellen von Kunststoffvorformlingen (10), wobei diese Herstellungseinrichtung (2) eine Vielzahl von Herstellungskavitäten (22) aufweist, welche jeweils zum Formen einzelner Kunststoffvorformlinge (10) geeignet und bestimmt sind und mit einer Umformungseinrichtung (6), welche dazu geeignet und bestimmt ist, die von der Herstellungseinrichtung (2) hergestellten Kunststoffvorformlinge (10) zu Kunststoffbehältnisse umzuformen, wobei diese Umformungseinrichtung (6) eine Vielzahl von Umformungsstationen (62) aufweist, welche jeweils dazu geeignet und bestimmt sind, Kunststoffvorformlinge (10) zu den Kunststoffbehältnissen umzuformen, mit einer Transporteinrichtung (8), welche die von der Herstellungseinrichtung (2) hergestellten Kunststoffvorformlinge (10) zu der Umformungseinrichtung (6) entlang eines vorgegebenen Transportpfads transportiert und mit einer Erwärmungseinrichtung (4), welche die von der Herstellungseinrichtung (2) hergestellten Kunststoffvorformlinge (10) erwärmt, wobei diese Erwärmungseinrichtung (4) zwischen der Herstellungseinrichtung (2) und der Umformungseinrichtung (6) angeordnet ist, **dadurch gekennzeichnet, dass**
die Vorrichtung (1) wenigstens eine erste Inspektionseinrichtung (11-19) aufweist, welche dazu geeignet und bestimmt ist, wenigstens eine physikalische Eigenschaft eines von der Herstellungseinrichtung (2) hergestellten Kunststoffvorformlings (10) zu erfassen und wenigstens einen ersten Wert auszugeben, der für diese physikalische Eigenschaft charakteristisch ist und die Vorrichtung (1) weiterhin eine erste Zuordnungseinrichtung (32) aufweist, welche dazu geeignet und bestimmt ist einem inspizierten Kunststoffvorformling (10) diejenige Herstellungskavität (22), welche diesen Kunststoffvorformling (10) hergestellt hat, zuzuordnen.

2. Vorrichtung (1) nach Anspruch 1,
**dadurch gekennzeichnet, dass**
die Herstellungseinrichtung (2) eine Steuerungseinrichtung aufweist, welche dazu geeignet und bestimmt ist, die Herstellungseinrichtung (2) unter Berücksichtigung dieses ersten Wertes zu steuern und insbesondere zu regeln.

3. Vorrichtung (1) nach wenigstens einem der vorangegangenen Ansprüche,
**dadurch gekennzeichnet, dass**
die Herstellung der Kunststoffvorformlinge in den einzelnen Herstellungskavitäten (22) individuell steuerbar ist und/oder wenigstens ein für die Herstellung der Kunststoffvorformlinge (10) in den Herstellungskavitäten charakteristischer Parameter für jede Herstellungskavität individuell steuerbar ist.

4. Vorrichtung (1) nach wenigstens einem der vorangegangenen Ansprüche,
**dadurch gekennzeichnet, dass**
die erste Inspektionseinrichtung im Bereich der Erwärmungseinrichtung (4) angeordnet ist.

5. Vorrichtung (1) nach wenigstens einem der vorangegangenen Ansprüche,
**dadurch gekennzeichnet, dass**
die erste Inspektionseinrichtung an einer vorgegebenen Position entlang des Transportpfads der Kunststoffvorformlinge angeordnet ist, wobei vorteilhaft diese Position aus einer Gruppe von Positionen ausgewählt ist, welche eine Zuführeinrichtung, welche die Kunststoffvorformlinge der Erwärmungseinrichtung zuführt, ein Umlenkrad der Transporteinrichtung, welches eine Transportrichtung der Kunststoffvorformlinge umkehrt, oder eine Zuführeinrichtung, welche die Kunststoffvorformlinge der Umformungseinrichtung zuführt enthält.

6. Vorrichtung (1) nach wenigstens einem der vorangegangenen Ansprüche,
**dadurch gekennzeichnet, dass**
die Vorrichtung (1) eine weitere Inspektionseinrichtung (25) zum Inspizieren der Kunststoffvorformlinge aufweist, wobei diese weitere Inspektionseinrichtung bevorzugt an einem Auslauf der Herstellungseinrichtung (2) angeordnet ist.

7. Vorrichtung (1) nach wenigstens einem der vorangegangenen Ansprüche,
**dadurch gekennzeichnet, dass**
die Vorrichtung (1) eine zweite Inspektionseinrichtung (12, 14, 16) aufweist, welche dazu geeignet und bestimmt ist, wenigstens eine physikalische Eigenschaft eines von der Herstellungseinrichtung (2) hergestellten Kunststoffvorformlings (10) zu erfassen und wenigstens einen ersten Wert auszugeben, der für diese physikalische Eigenschaft charakteristisch ist und insbesondere die erste Inspektionseinrichtung und die zweite Inspektionseinrichtung an unterschiedlichen Positionen des Transportpfads angeordnet sind.

8. Vorrichtung (1) nach wenigstens einem der vorangegangenen Ansprüche,
**dadurch gekennzeichnet, dass**
die wenigstens eine physikalische Eigenschaft eines von der Herstellungseinrichtung (2) hergestellten Kunststoffvorformlings (10) aus einer Gruppe von Eigenschaften ausgewählt ist, welche eine Eigenschaft einer Seitenwand des Kunststoffvorformlings wie insbesondere aber nicht ausschließlich eine Dicke oder Transparenz, eine Eigenschaft einer Mündung des Kunststoffvorformlings, wie insbesondere eine Eigenschaft eines Gewindes des Kunststoffvorformlings oder eine Eigenschaft eines Tragrings des Kunststoffvorformlings, eine Farbe des Kunststoffvorformlings, einen Infrarot - Absorptionsgrad des Kunststoffvorformlings, eine Temperatur des Kunststoffvorformlings, eine Eigenschaft eines Preformgates des Kunststoffvorfomlings und dergleichen enthält.

9. Vorrichtung (1) nach wenigstens einem der vorangegangenen Ansprüche,
**dadurch gekennzeichnet, dass**
die Vorrichtung eine zweite Zuordnungseinrichtung aufweist, welche einem inspizierten Kunststoffvorformling (10) diejenige Umformungsstation zuordnet, welche diesen Kunststoffvorformling zu einem Kunststoffbehältnis umformt.

10. Vorrichtung (1) nach wenigstens einem der vorangegangenen Ansprüche,
**dadurch gekennzeichnet, dass**
wenigstens zwei unterschiedliche Inspektionseinrichtungen vorgesehen sind, welche dazu geeignet und bestimmt sind, wenigstens zwei insbesondere in der Längsrichtung der Kunststoffvorformlinge unterschiedliche Bereiche der Kunststoffvorformlinge zu inspizieren, wobei bevorzugt diese unterschiedlichen Bereiche aus einer Gruppe von Bereichen ausgewählt sind, welche einen Mündungsbereich der Kunststoffvorformlinge, einen Grundkörper der Kunststoffvorformlinge und einen Bodenbereich der Kunststoffvorformlinge enthält.

11. Vorrichtung (1) nach wenigstens einem der vorangegangenen Ansprüche,
**dadurch gekennzeichnet, dass**
die Vorrichtung wenigstens eine Ausschleuseeinrichtung aufweist, welche dazu geeignet ist, von wenigstens einer Inspektionseinrichtung inspizierte Kunststoffvorformlinge aus einem Transportpfad und insbesondere einem Transportpfad zwischen der Herstellungseinrichtung und der Umformungseinrichtung (6) auszuschleusen.

12. Verfahren zum Herstellen von Kunststoffbehältnissen wobei eine Herstellungseinrichtung (2) Kunststoffvorformlinge (10) herstellt, wobei diese Herstellungseinrichtung (2) eine Vielzahl von Herstellungskavitäten (22) aufweist, welche jeweils einzelne Kunststoffvorformlinge (10) formen und wobei eine Umformungseinrichtung (6), die von der Herstellungseinrichtung (2) hergestellten Kunststoffvorformlinge (10) zu Kunststoffbehältnissen (20) umformt, wobei diese Umformungseinrichtung (6) eine Vielzahl von Umformungsstationen (62) aufweist, welche jeweils die Kunststoffvorformlinge (10) zu den Kunststoffbehältnissen umformen und wobei eine Transporteinrichtung (8), die von der Herstellungseinrichtung (2) hergestellten Kunststoffvorformlinge (10) zu der Umformungseinrichtung (6) entlang eines vorgegebenen Transportpfads transportiert und eine Erwärmungseinrichtung (4) die von der Herstellungseinrichtung (2) hergestellten Kunststoffvorformlinge (10) erwärmt, wobei diese Erwärmungseinrichtung (4) zwischen der Herstellungseinrichtung (2) und der Umformungseinrichtung (6) angeordnet ist,
**dadurch gekennzeichnet, dass**
die Vorrichtung (1) wenigstens eine erste Inspektionseinrichtung (12, 14, 16) aufweist, welche wenigstens eine physikalische Eigenschaft eines von der Herstellungseinrichtung (2) hergestellten Kunststoffvorformlings (10) erfasst und wenigstens einen ersten Wert ausgibt, der für diese physikalische Eigenschaft charakteristisch ist und die Vorrichtung (1) weiterhin eine Zuordnungseinrichtung aufweist, welche einem inspizierten Kunststoffvorformling (10) diejenige Herstellungskavität (22), welche diesen Kunststoffvorformling (10) hergestellt hat, zuordnet.

13. Verfahren nach dem vorangegangenen Anspruch,
**dadurch gekennzeichnet, dass**
die Herstellungseinrichtung (2) wenigstens zeitweise unter Verwendung des ersten Wertes gesteuert wird.

14. Verfahren nach wenigstens einem der vorangegangenen Ansprüche,
**dadurch gekennzeichnet, dass**
die Umformungseinrichtung (6) wenigstens zeitweise unter Verwendung des ersten Wertes gesteuert wird.

15. Verfahren nach wenigstens einem der vorangegangenen Ansprüche,
**dadurch gekennzeichnet, dass**
die Vorrichtung (1) wenigstens eine zweite Inspektionseinrichtung (12, 14, 16) aufweist, welche wenigstens eine zweite physikalische Eigenschaft eines von der Herstellungseinrichtung (2) hergestellten Kunststoffvorformlings (10) erfasst und wenigstens einen zweiten Wert ausgibt, der für diese physikalische Eigenschaft charakteristisch ist, wobei bevorzugt der erste Wert dem zweiten Wert zugeordnet wird.
